Europäisches Patentamt

European Patent Office

Office européen des brevets

(11) Veröffentlichungsnummer : **0 191 918**
**B1**

(12) **EUROPÄISCHE PATENTSCHRIFT**

(45) Veröffentlichungstag der Patentschrift :
05.04.89

(21) Anmeldenummer : 85115247.0

(22) Anmeldetag : 30.11.85

(51) Int. Cl.⁴ : **B 01 D 53/36**, B 01 J 37/04, B 01 J 23/86

(54) Katalysator zur selektiven Reduzierung von Stickoxiden in Abgasen sowie Verfahren zur Herstellung und Verwendung eines solchen Katalysators.

(30) Priorität : 19.02.85 DE 3505648

(43) Veröffentlichungstag der Anmeldung :
27.08.86 Patentblatt 86/35

(45) Bekanntmachung des Hinweises auf die Patenterteilung : 05.04.89 Patentblatt 89/14

(84) Benannte Vertragsstaaten :
AT BE DE FR GB IT NL SE

(56) Entgegenhaltungen :
DE–A– 2 504 027
DE–A– 2 552 003

(73) Patentinhaber : **DIDIER-WERKE AG**
Lessingstrasse 16-18
D-6200 Wiesbaden (DE)

**DIDIER ENGINEERING GmbH**
Alfredstrasse 28 Postfach 10 09 45
D-4300 Essen 1 (DE)

(72) Erfinder : **Wagener, Dietrich, Prof. Dr.**
Hesselerkamp 7a
D-4300 Essen 16 (DE)
Erfinder : **Laue, Karl Heinrich**
Bergische Strasse 41
D-4320 Hattingen 16 (DE)
Erfinder : **Wunderlich, Egmar**
Kölner Strasse 418
D-4330 Mülheim (DE)
Erfinder : **Sander, Theo**
Cäsarstrasse 23
D-4300 Essen 1 (DE)
Erfinder : **Flockenhaus, Claus, Prof. Dr.**
Tersteegenweg 16
D-4300 Essen 1 (DE)
Erfinder : **Hackler, Erich**
Kettwiger Weinberg 6
D-4300 Essen 18 (DE)
Erfinder : **Levkov, Blagoje, Dr.**
Rudolf-Vogt-Strasse 41
D-6200 Wiesbaden (DE)
Erfinder : **Grimm, Daniel**
Hauptstrasse 10
D-6229 Schlangenbad-Bärstadt (DE)
Erfinder : **Kainer, Hartmut, Dr.**
Sauerbruchstrasse 1a
D-6200 Wiesbaden 12 (DE)

EP 0 191 918 B1

Erfinder : **Stein, Hermann**
**Auf dem Köppel 2**
**D-6702 Bad Dürkheim (DE)**
Erfinder : **Bühler, Hans-Eugen, Prof. Dr.**
**Kastanienweg 3c**
**D-6240 Königstein 3 (DE)**
Erfinder : **Kalfa, Horst, Dr.**
**Burchterstrasse 2**
**D-6270 Idstein (DE)**
Erfinder : **Jansen, Johann**
**Brentanostrasse 9**
**D-4100 Duisburg 11 (DE)**
Erfinder : **Stender, Werner**
**Dückerstrasse 7**
**D-4281 Raesfeld (DE)**
Erfinder : **Max, Arnold**
**Asbeckstrasse 9**
**D-4250 Bottrop (DE)**

(74) Vertreter : **Brückner, Raimund, Dipl.-Ing.**
**c/o Didier-Werke AG Lessingstrasse 16-18**
**D-6200 Wiesbaden (DE)**

**Beschreibung**

Die Erfindung bezieht sich auf einen Katalysator zur selektiven Reduzierung von Stickoxiden in Abgasen mittels Ammoniak.

Derartige Katalysatoren sind bekannt, nämlich z. B. $Fe_2O_3/Cr_2O_3$-haltige oder $V_2O_5/TiO_2/WO_3$-haltige Katalysatoren ; diese lassen in ihrer Wirkungsweise jedoch zu wünschen übrig.

Ferner ist in der DE-A-25 04 027 ein Verfahren der o. g. Art beschrieben, wobei das Katalysatormaterial auf einen Träger aufgebracht ist.

Aufgabe der vorliegenden Erfindung ist es, einen Katalysator der gattungsgemäßen Art hinsichtlich seiner Wirkungsweise zu verbessern.

Diese Aufgabe wird im wesentlichen dadurch gelöst, daß der Katalysator aus einem unter etwa 0,2 mm gekörnten und mit Phosphorsäure gebundenen Stoffgemisch der katalytisch aktiven Grudsubstanzen A und B besteht, wobei die Grundsubstanz A die Anteile :

mindestens

| | |
|---|---|
| 89 | Gew.-% $Fe_2O_3$ |
| 3-4 | Gew.-% $Fe_3O_4$ |
| 4-5 | Gew.-% $SiO_2$ |
| 1-2 | Gew.-% $Al_2O_3$ |
| 0,01-0,2 | Gew.-% MnO |
| 0,01-0,03 | Gew.-% CaO |
| 0,01-0,02 | Gew.-% MgO |
| 0,001-0,7 | Gew.-% $V_2O_5$ |

und die Grundsubstanz B die Anteile :

| | |
|---|---|
| 30-48 | Gew.-% $Cr_2O_3$ |
| 12-30 | Gew.-% $Fe_2O_3$ |
| 10-30 | Gew.-% $Al_2O_3$ |
| 10-25 | Gew.-% MgO |
| 1-5 | Gew.-%$SiO_2$ |

aufweisen.

Überraschenderweise haben solche Stoffgemische hohe Aktivität und Selektivität bezüglich des Stickoxid-Umsatzes, hohes Sorptionsvermögen bezüglich Ammoniak und niedriges Oxidationsvermögen bezüglich Schwefeldioxid und Ammoniak und zwar insbesondere im Temperaturbereich zwischen etwa 350 und 450 °C. Dies ist umso verwunderlicher, als die bekannten $Fe_2O_3/Cr_2O_3$-haltigen Katalysatoren zwar verhältnismäßig hohe Aktivität und Selektivität haben, ebenso wie Stoffkombinationen aus $V_2O_5$ und $TiO_2$ in Mischungen mit $WO_3$, deren Sorptionsvermögen bezüglich Ammoniak jedoch gering ist, so daß eine schlechte Regelcharakteristik bei starken und spontanen Stickoxid-Schwankungen auftritt. Die Eigenschaften des Stoffgemisches aus den Grundsubstanzen A und B sind auch deswegen überraschend, weil Gemische aus $V_2O_5$ und $TiO_2$ in einem Temperaturbereich von 350 bis 450 °C bereits eine erhebliche Oxidationsförderung zeigen, welche nur durch Zuführung von Inhibitoren begrenzt werden könnte oder ein solcher Katalysator für schwefelhaltige Gase nicht einsetzbar wäre ; im Temperaturbereich von 280 bis 350 °C zeigen $V_2O_5/TiO_2$-Katalysatoren zwar verhältnismäßig hohe Aktivität und Selektivität bezüglich des Stickoxid-Umsatzes sowie geringe Oxidationsneigung, jedoch auch geringes Sorptionsvermögen bezüglich Ammoniak, so daß ihre Regelcharakteristik schlecht ist. $Fe_2O_3/Cr_2O_3$-Gemische weisen bei Temperaturen von 280 bis 350 °C zwar ein hohes Sorptionsvermögen auf, wodurch sich ein gutes Regelverhalten ergibt, liegen jedoch in ihrer Aktivität niedrig.

Auf diese Weise erhält der Katalysator neben einer an sich bekannten hohen Aktivität und Selektivität ein außerordentlich gutes Regelverhalten und wirtschaftlichere Einsatzmöglichkeiten. Das gute Regelverhalten wird nämlich durch das verhältnismäßig hohe Sorptionsvermögen bezüglich Ammoniak bestimmt, so daß auch bei erheblichen Stickoxid-Schwankungen in dem zu reinigenden Abgas die Gefahr von Ammoniakdurchbrüchen vermieden werden kann, was sonst zu Schwierigkeiten in nachgeschalteten Anlagen führen würde. Aufgrund des niedrigen Oxidationsvermögens des erfindungsgemäßen Katalysators wird vermieden, daß in dem zu reinigenden Gas befindliches Schwefeldioxid, Ammoniak oder dergleichen aufoxidiert werden. Das bei der Aufoxidation von Schwefeldioxid entstehende Schwefeltrioxid würde anderenfalls mit dem Ammoniak im Abgasstrom zu Sulfaten umgewandelt. Die aufgrund des niedrigen Oxidationsvermögens des Katalysators vermiedene Oxidation des zwecks Reduktion zugegebenen Ammoniaks zu Wasser und Stickstoff verringert den Betriebsmitteleinsatz, wodurch das mit einem erfindungsgemäßen Katalysator betriebene Reinigungsverfahren wirtschaftlicher ausgeführt werden kann.

Für die meisten Einsatzzwecke des Katalysators ist es bei einer besonderen Ausführungsform der Erfindung von besonderem Vorteil, wenn das Sorptionsvermögen bezüglich Ammoniak so hoch eingestellt ist, daß in einem Temperaturbereich zwischen etwa 280 und 450 °C trotz Stickoxid-Schwankungen von bis zu 200 mg/m³ und im wesentlichen konstanter Ammoniak-Zufuhr kein Ammoniak-Durchbruch im Abgas auftritt.

Ferner ist bei einer weiteren Ausgestaltung der Erfindung von Vorzug, daß die Aktivität und Selektivität bezüglich des Stickoxid-Umsatzes im Temperaturbereich zwischen 280 und 450 °C im wesentlichen konstant und das Oxidationsvermögen vernachlässigbar ist.

Nach einem weiteren Erfindungsmerkmal zeichnet sich der Katalysator durch Makroporen zwischen etwa 0,5 und 50 μm aus.

Es hat sich ferner überraschenderweise gezeigt, daß durch Sulfatisierung die Aktivität des Stoffgemisches erheblich erhöht werden kann.

Das gleiche trifft für einen Temperaturbereich von 280 bis 350 °C zu, wenn das $V_2O_5$ im Gemisch fein verteilt ist.

Dem trockenen Stoffgemisch des Katalysators kann man genügende Festigkeit und Wasserunempfindlichkeit verleihen, wenn es unter 0,2 mm gekörnt und mit Phosphorsäure gebunden wird.

Die Aktivierung des Katalysators erfolgt vorzugsweise danach mittels Schwefelsäure oder $VOSO_4$ durch Tränkung.

Eine Wärmebehandlung, d. h. Kalzinierung, des Stoffgemisches erfolgt vorzugsweise bei 200 bis 500 °C, wobei Temperatursteigerungsraten vorzugsweise zwischen 500 °C/min und 1 °C/min angewendet werden.

Ferner wird vorgeschlagen, dem Stoffgemisch Fasermaterial aus Glas und/oder Keramik und/oder Kohlenstoff und/oder Stahl zuzumischen, welches Fasermaterial als Stützgerüst beim Verpressen des Stoffgemisches zu Formkörpern dient.

Das Verpressen des Stoffgemisches erfolgt vorzugsweise isostatisch zu glatten oder gewellten Platten.

Dabei hat es sich als besonders vorteilhaft erwiesen, wenn ein Preßdruck zwischen 0,1 und 100 t/cm², vorzugsweise zwischen 1 und 50 t/cm², angewendet wird.

Ferner erfolgt das Pressen vorzugsweise zu Platten mit einer Stärke von etwa 0,5 bis 5 mm, vorzugsweise etwa 1 bis 3 mm.

Die Größe der Platten wird beim Pressen nach einem weiteren Erfindungsvorschlag zwischen etwa 1 und 10.000 cm² eingestellt.

Eine vorteilhafte Verwendung eines Katalysators der oben geschilderten Art besteht darin, daß er in Form von Platten oder gewellten Platten in vorgegebenen Abständen in Kassetten eingesetzt wird, um eine Freipassagen-Katalysator-Einheit zu schaffen. Die Kassetten können zur Distanzeinstellung des in Form von Platten vorgesehenen Katalysators Zwischenbleche in Wellenform aufweisen. Durch diese Anordnung entstehen unendlich lange Schlitze.

Die Kassetten werden zweckmäßigerweise zu Gesamtreaktoren zusammengestellt.

In der Zeichnung veranschaulichen :

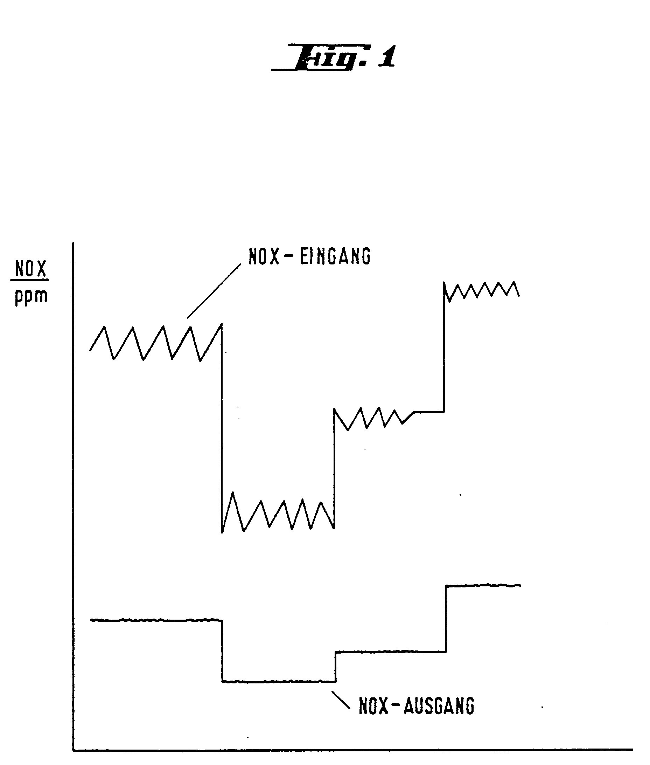

Figur 1 wie der erfindungsgemäße Katalysator Schwankungen im Stickoxid-Eingangsgehalt weitestgehend ausgleicht,

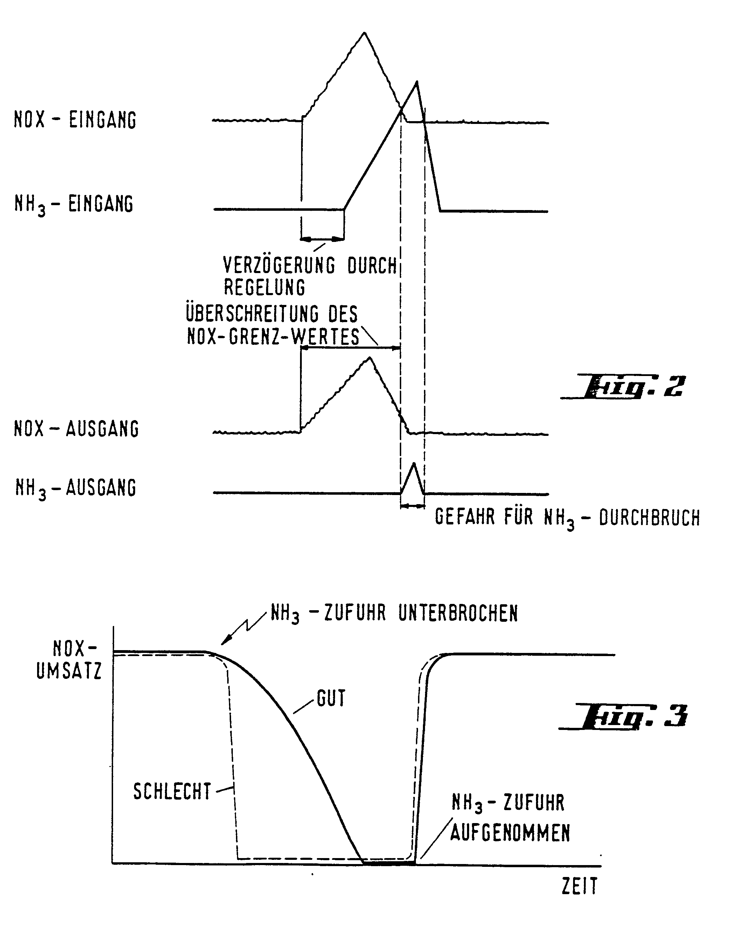

Figur 2 wie mit dem erfindungsgemäßen Katalysator Ammoniak-Durchbrüche vermieden werden können, und

Figur 3 das Regelverhalten eines nach der Erfindung ausgebildeten Katalysators aufgrund des hohen Sorptionsvermögens bezüglich Ammoniak.

**Patentansprüche**

1. Katalysator zur selektiven Reduzierung von Stickoxiden in Abgasen mittels Ammoniak, bestehend aus einem unter etwa 0,2 mm gekörnten und mit Phosphorsäure gebundenen Stoffgemisch der katalytisch aktiven Grundsubstanzen A und B, wobei die Grundsubstanz A die Anteile :

mindestens

| | |
|---|---|
| 89 | Gew.-% $Fe_2O_3$ |
| 3-4 | Gew.-% $Fe_3O_4$ |
| 4-5 | Gew.-% $SiO_2$ |
| 1-2 | Gew.-% $Al_2O_3$ |
| 0,01-0,2 | Gew.-% MnO |
| 0,01-0,03 | Gew.-% CaO |
| 0,01-0,02 | Gew.-% MgO |
| 0,001-0,7 | Gew.-% $V_2O_5$ |

und die Grundsubstanz B die Anteile :

4

| | |
|---|---|
| 30-48 | Gew.-% $Cr_2O_3$ |
| 12-30 | Gew.-% $Fe_2O_3$ |
| 10-30 | Gew.-% $Al_2O_3$ |
| 10-25 | Gew.-% MgO |
| 1-5 | Gew.-%$SiO_2$ |

aufweisen.

2. Katalysator nach Anspruch 1, dadurch gekennzeichnet, daß dem Stoffgemisch bei seiner Herstellung Fasermaterial aus Glas und/oder Keramik und/oder Kohlenstoff und/oder Stahl zugemischt worden ist.

3. Katalysator nach Anspruch 1 oder 2, dadurch gekennzeichnet, daß das Stoffgemisch durch Tränkung mittels Schwefelsäure und/oder $VOSO_4$ aktiviert worden ist.

4. Katalysator nach einem der Ansprüche 1 bis 3, dadurch gekennzeichnet, daß das Stoffgemisch zu glatten oder gewellten Platten isostatisch gepreßt worden ist.

5. Verwendung eines Katalysators nach einem der Ansprüche 1 bis 4 in Form von in vorgegebenen Abständen in Kassetten eingesetzten glatten oder gewellten Platten.

6. Verwendung nach Anspruch 5, dadurch gekennzeichnet, daß die Kassetten zur Distanzeinstellung des plattenförmigen Katalysators Zwischenbleche in Wellenform aufweisen.

7. Verwendung nach Anspruch 5 oder 6, dadurch gekennzeichnet, daß die Kassetten zu Gesamtreaktoren zusammengestellt werden.

## Claims

1. A catalyst for the selective reduction of nitrogen oxides in exhaust gases by means of ammonia comprising a mixture of the catalytically active component substances A and B bonded with phosphoric acid and granulated to less than about 0.2 mm, the component substance A containing the constituents :

at least

| | |
|---|---|
| 89 | wt.-% $Fe_2O_3$ |
| 3-4 | wt.-% $Fe_3O_4$ |
| 4-5 | wt.-% $SiO_2$ |
| 1-2 | wt.-% $Al_2O_3$ |
| 0.01-0.2 | wt.-% MnO |
| 0.01-0.03 | wt.-% CaO |
| 0.01-0.02 | wt.-% MgO |
| 0.001-0.7 | wt.-% $V_2O_5$ |

and the component substance B containing the constituents :

| | |
|---|---|
| 30-48 | wt.-% $Cr_2O_3$ |
| 12-30 | wt.-% $Fe_2O_3$ |
| 10-30 | wt.-% $Al_2O_3$ |
| 10-25 | wt.-% MgO |
| 1-5 | wt.-%$SiO_2$ |

2. Catalyst as claimed in claim 1, characterised in that during the manufacture of the mixture fibre material of glass, and/or ceramic, and/or carbon and/or steel has been mixed in.

3. Catalyst as claimed in claim 1 or 2, characterised in that the mixture has been activated by impregnation with sulphuric acid and/or $VOSO_4$.

4. Catalyst as claimed in one of claims 1 to 3, characterised in that the mixture has been isostatically pressed into flat or corrugated plates.

5. Use of a catalyst as claimed in one of claims 1 to 4, in the form of flat or corrugated plates inserted in cassettes at a predetermined spacing.

6. Use as claimed in claim 5, characterised in that the cassettes have intermediate plates of wave shape for adjusting the spacing of the plate-shaped catalyst.

7. Use as claimed in claim 5 or 6, characterised in that the cassettes are assembled into reactors.

## Revendications

1. Catalyseur pour la réduction sélective, au moyen d'ammoniac, d'oxydes d'azote dans des gaz rejetés, consistant en un mélange de substances ayant une taille de particules inférieure à environ 0,2 mm et lié avec de l'acide phosphorique, constitué des substances de base à activé catalytique A et B, la substance de base A présentant les proportions suivantes :

au moins

| | |
|---|---|
| 89 % | en poids de $Fe_2O_3$ |
| 3-4 % | en poids de $Fe_3O_4$ |
| 4-5 % | en poids de $SiO_2$ |
| 1-2 % | en poids de $Al_2O_3$ |
| 0,01-0,2 % | en poids de $MnO$ |
| 0,01-0,03 % | en poids de $CaO$ |
| 0,01-0,02 % | en poids de $MgO$ |
| 0,001 - 0,7 % | en poids de $V_2O_5$ |

et la substance de base B présentant les proportions :

| | |
|---|---|
| 30-48 % | en poids de $Cr_2O_3$ |
| 12-30 % | en poids de $Fe_2O_3$ |
| 10-30 % | en poids de $Al_2O_3$ |
| 10-25 % | en poids de $MgO$ |
| 1-5 % | en poids de $SiO_2$ |

2. Catalyseur selon la revendication 1, caractérisé par le fait qu'un matériau fibreux à base de verre et/ou de céramique et/ou de carbone et/ou d'acier a été incorporé au mélange de substances, lors de sa préparation.

3. Catalyseur selon la revendication 1 ou 2, caractérisé par le fait que le mélange de substances a été activé par imprégnation au moyen d'acide sulfurique et/ou de $VOSO_4$.

4. Catalyseur selon l'une des revendications 1 à 3, caractérisé par le fait que le mélange de substances a été pressé, de façon isostatique, en plaques lisses ou cannelées.

5. Utilisation d'un catalyseur selon l'une des revendications 1 à 4, sous forme de plaques lisses ou cannelées, insérées dans des cassettes, à intervalles préétablis.

6. Utilisation selon la revendication 5, caractérisée par le fait, que pour l'espacement du catalyseur en forme de plaques, les cassettes comportent des tôles intermédiaires ayant une forme ondulée.

7. Utilisation selon la revendication 5 ou 6, caractérisée par le fait que les cassettes sont assemblées en réacteurs d'ensemble.

**Fig. 1**

NOX ppm

NOX – EINGANG

NOX – AUSGANG

EP 0 191 918 B1

NOX – EINGANG

NH$_3$ – EINGANG

VERZÖGERUNG DURCH REGELUNG
ÜBERSCHREITUNG DES NOX-GRENZ-WERTES

*Fig. 2*

NOX – AUSGANG

NH$_3$ – AUSGANG

GEFAHR FÜR NH$_3$ – DURCHBRUCH

NH$_3$ – ZUFUHR UNTERBROCHEN

NOX-UMSATZ

GUT

*Fig. 3*

SCHLECHT

NH$_3$ – ZUFUHR AUFGENOMMEN

ZEIT

2